# EUROPEAN PATENT SPECIFICATION

(11) **EP 2 520 762 B1**
(45) Date of publication and mention of the grant of the patent: **28.10.2015**
(21) Application number: 12161132.1
(22) Date of filing: 23.03.2012
(51) Int. Cl.: F01D 5/00, B23P 6/00

(54) **Welding Ti-6246 integrally bladed rotor airfoils**
Schweißen von vollständig mit Laufschaufeln versehenen Rotoren aus Ti-6246
Soudage de surfaces portantes de rotor à aubage intégral Ti-6246

(30) Priority: 06.05.2011 US 201113102709
(43) Date of publication of application: 07.11.2012
(73) Proprietor: United Technologies Corporation, Hartford, CT 06101 (US)
(72) Inventor: Chin, Herbert A., Portland, CT Connecticut 06480 (US); Schaefer, Robert P., Vernon Rockville, CT Connecticut 06066 (US); Haynes, Andrew L., Glastonbury, CT Connecticut 06033 (US); Alexander, David G., Manchester, CT Connecticut 06042 (US); Martinez, Sonia A., Ellington, CT Connecticut 06029 (US); Lin, Wangen, South Glastonbury, CT Connecticut 06073 (US)
(74) Representative: Hall, Matthew Benjamin

(56) References cited:
- EP-A2- 1 253 289
- US-A1- 2005 274 008
- US-B1- 6 238 187

## Description

### BACKGROUND

The increasing use of integrally bladed rotor hardware in large high-performance gas turbine engines is driven by the demand for improvements in performance and efficiency. In conventional rotors, rotating airfoils are retained by dovetail slots broached into the rim of a disc. In an integrally bladed rotor, the airfoils and disc form one continuous piece of metal. The weight and fuel savings afforded by integrally bladed rotors result from their ability to retain rotating airfoils with less disc mass than would be required in a conventionally designed rotor. Furthermore, the reduced disc mass of an integrally bladed rotor disc permits weight reduction in other components which react upon or obtain a reaction from the rotors, i.e. shafts, hubs, and bearings.

In the past, a major disadvantage associated with the use of integrally bladed rotors in large gas turbine engines has been the lack of a reliable method for repairing integrally bladed rotor airfoils that have been damaged beyond blendable limits. Because the airfoils are integral with the disc, damage to airfoils beyond blendable limits requires a removal of the entire rotor from service and replacement with a new integrally bladed rotor, at significant expense.

Other concerns associated with integrally bladed rotors relate to the fabrication method employed to manufacture them. They can be machined out of a single large forging; however, this approach is not desirable. A large forging (e.g. large billet) has lower property capability, and it can be very expensive due to high buy to fly ratio. Also, the part may be at risk of scrap out due to machining errors during manufacture. Another approach for manufacturing integrally bladed rotors is to attach separately forged airfoils to a rotor by a friction welding process.

A titanium alloy having a nominal composition in weight percent of Ti-6A1-2Sn-4Zr-6Mo (referred to as Ti-6246) is a desirable alloy for integrally bladed rotors due to its high toughness, tensile and fatigue strength. However, the fusion weldability of Ti-6246 is limited by the nature of the weld zone microstructure which may form brittle orthorhombic martensite under rapid cooling from the fusion weld. As such, the original equipment manufacturer (OEM) friction weld must be post-weld heat treated to stabilize the microstructure and relieve stresses. Secondly, the integrally bladed rotor must be able to undergo subsequent in service weld repairs due to foreign object damage. While weld properties can be restored with full solution plus age heat treatment after one weld repair, it is impractical to perform full solution heat treatment after weld repairs due to potential high risk of airfoil distortion and surface contamination, especially for non-OEM welds.

### SUMMARY

The invention is a method to weld or repair damaged Ti-6246 alloy airfoils in integrally bladed rotors, according to the preamble of claim 1 and as known from US2005/274008. Damaged regions of the airfoil are built up with repair metal by fusion welding. Following welding or repair, the airfoil is given a stress relief heat treatment of about 1300°F (704°C) for 1 to 4 hours. Optional laser shock peening introduces surface compressive residual stress in the airfoil for additional mechanical integrity. Ti-6242 alloy filler metal in one embodiment advantageously minimizes undesirable weld microstructure.

Thus viewed from a first aspect the present invention can be seen to provide a method comprising: welding a first compatible metal to an alloy component wherein dimensions of the alloy component with the welded first metal exceed original dimensions of the component; reshaping the component to predetermined specifications; and stress relieving the component, characterised in that the alloy component is a Ti-6246 alloy component, and the first metal is a filler metal alloy that comprises Ti-6242 alloy.

### BRIEF DESCRIPTION OF THE DRAWINGS

Certain preferred embodiments of the invention will now be described by way of example only and with reference to the accompanying drawings in which:
FIG. 1 is a diagrammatic partial view of rotor blades integrally attached to a rotor disc;
FIG. 2 is a flowchart of the repair process according to an embodiment of the invention;
FIG. 3 is a schematic illustration of an integrally bladed damaged airfoil;
FIGS. 4A and 4B illustrate typical shape of the fusion zone and weld metal grain morphology of Ti-6246 alloy weld metal and Ti-6242 alloy weld metal, respectively; and
FIG. 5 is a schematic illustration of the airfoil after repair.

### DETAILED DESCRIPTION

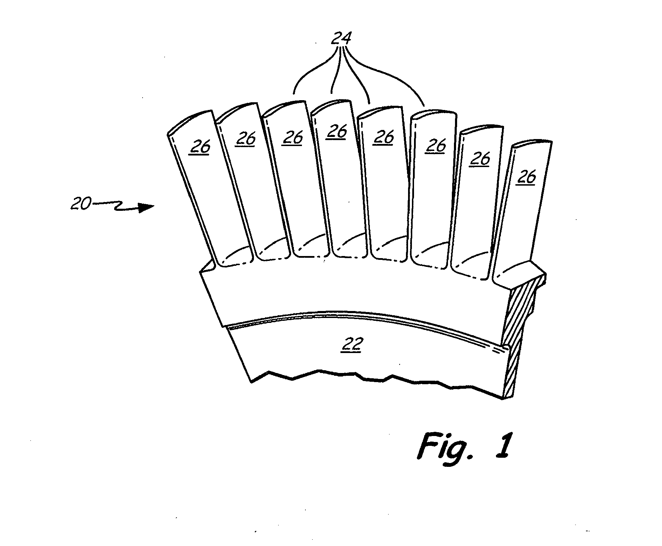

A schematic cutaway view of Ti-6246 alloy integrally bladed rotor (IBR) 20 is shown in FIG. 1. IBR 20 comprises disc 22 and rotor blades 24 extending radially out from the circumference of disc 22. Each rotor blade includes an airfoil 26 and may be integrally attached to disc 22 by metallurgical bonds. During service, airfoils 26 may be damaged by foreign object impact, erosion, high cycle fatigue, etc. Due to the high cost of material and manufacturing a new IBR, it is advantageous to repair damaged IBR's and return them to service.

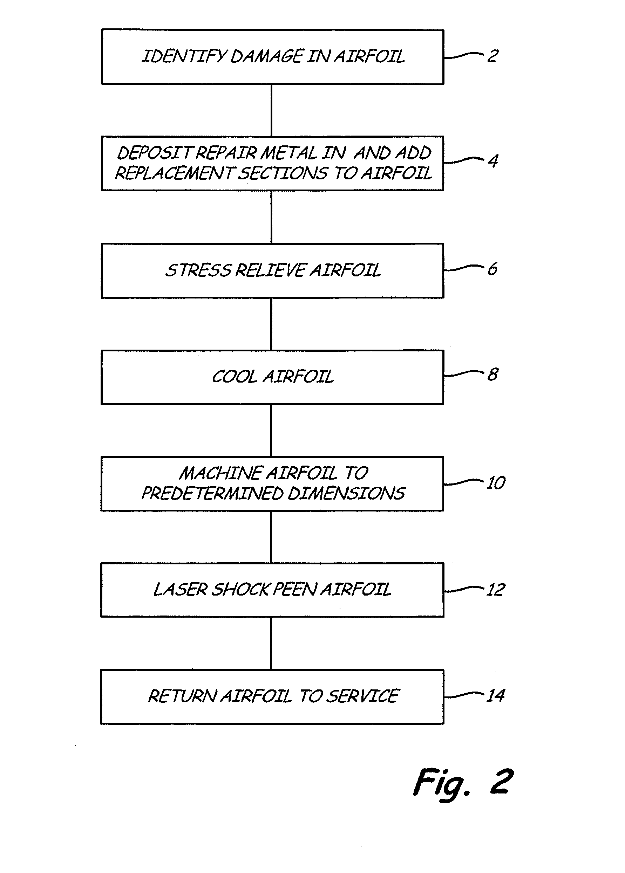

FIG. 2 illustrates the process for repairing a damaged IBR airfoil, which includes Steps 2, 4, 6, 8, 10, 12, and 14. First the damage is identified by appropriate engineering triage and characterized. (Step 2). Repair metal is deposited and replacement sections are added to the airfoil by welding. (Step 4). The airfoil is subjected to a stress relief heat treatment (Step 6), and cooled. (Step 8). The airfoil is machined to predetermined dimensions (Step 10), and preferably is subjected to laser shock peening. (Step 12). Finally, the repaired airfoil is returned to service. (Step 14).

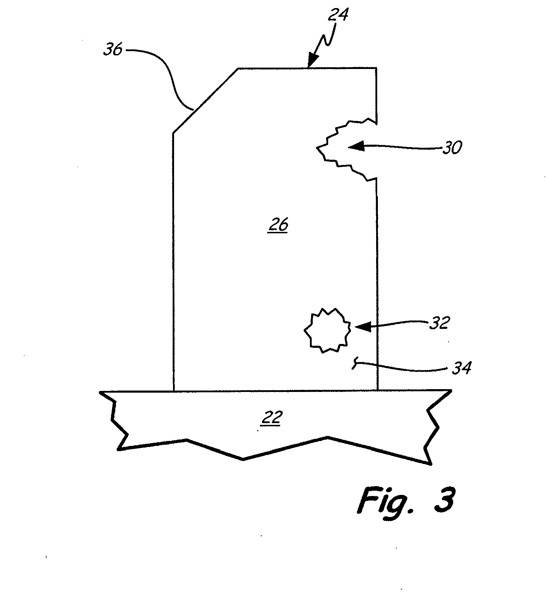

FIG. 3 illustrates respectively, but not inclusively, four common types of damage that airfoils 26 experience in service. Leading edge damage 30 represents a recess or broken away area of airfoil 26. Surface damage 32 represents a cavity or depression. Surface crack 34 and fractured corner 36 are also shown. These examples of damage and others not shown may be repaired by the methods taught in the current invention. For purposes of description, airfoil 26 represents blade 24 on disc 22, although the present invention should not be considered so limiting since the repair method disclosed herein may be extended for general use with any type and form of workpiece.

Prior to depositing repair metal in the damaged site (Step 4), the site is cleaned by those methods known to those in the art. Material may be removed around the damage sites, such as cracks and foreign contaminants, to allow for easier metal deposition.

Repair metal may then be deposited in the damaged site until the repaired region exceeds the initial dimensions of airfoil 20. (Step 4). Damaged sections may also be cut away and replaced by new sections. Repair may be performed by many methods known in the art. A preferred embodiment is repair by fusion welding. Preferred embodiments are gas tungsten arc welding (GTAW), laser beam welding, plasma arc welding and electron beam welding.

Titanium alloy candidates for integrally bladed rotor (IBR) or bladed disc (BLISK) applications for compressor stages behind the fan include, but are not limited to, in weight percent, Ti-6Al-2Sn-4Zr-6Mo (Ti-6246), Ti-6Al-2Sn-4Zr-2Mo (Ti-6242) and Ti-6Al-4V (Ti-6-4). Ti-6246 alloy exhibits improved elevated temperature properties as compared to Ti-6242 and Ti-6-4 alloys and is a leading candidate. Someone skilled in the art of weld repair of Ti-6242 and Ti-6-4 alloys would find difficulties in the weld repair of Ti-6246 alloy. In particular, enhanced crack growth behavior leading to reduced mechanical properties in the weld.

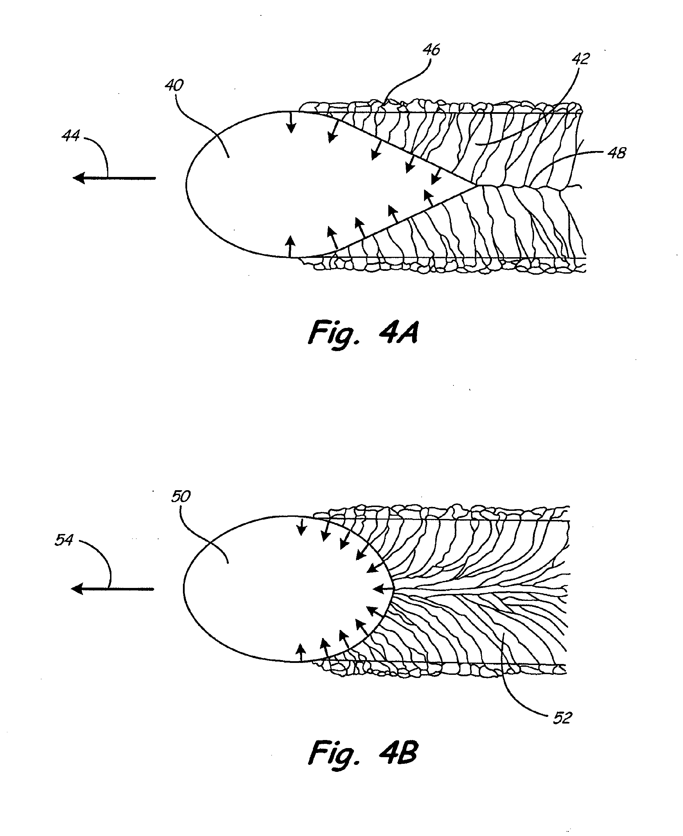

The crack growth behavior in Ti-6246 alloy weld metal is determined by grain boundary morphology and microstructure. Schematic sketches of fusion zones 40 and 50 and microstructures 42 and 52 behind the fusion zones during welding are shown in Figures 4A and 4B respectively. Arrows 44 and 54 indicate weld direction.

FIG. 4A illustrates the typical shape of fusion zone 40 and weld metal grain morphology 42 of an alloy with poor fusion weldability such as Ti-6246 alloy. During solidification columnar grains grow in from heat affected zone 46 towards the center of the fusion zone. In Ti-6246 alloy, the solidification behavior results in centerline grain boundary 48, which is susceptible to fracture along grain boundaries during service.

Fig. 4B illustrates the typical shape of fusion zone 50 and weld metal grain morphology 52 of an alloy with good fusion weldability such as Ti-6242 alloy under identical welding conditions as those used for Ti-6246 alloy shown in Fig. 4A. There is no centerline grain boundary in the weld microstructure. It can be suggested that differences in alloy composition result in a microstructure without a centerline grain boundary in a Ti-6242 alloy weld and the resulting absence of weld fracture along the weld centerline.

Another contributor to weld property in Ti-6246 alloy is the formation of a brittle orthorhombic martensite phase in the weld fusion zone microstructure. Orthorhombic martensite forms due to excessive rapid cooling rate in the weld zone immediately after welding. In Ti-6242 and Ti-6-4 alloys, the transformation can be suppressed by a slower cooling rate resulting in a more ductile alpha plus beta phase microstructure. In Ti-6246 alloy, the martensitic transformation occurs even at slower cooling rates and is difficult to suppress. The brittle martensite phase significantly increases the susceptibility of fracture in the weld metal. Furthermore, the brittle martensitic microstructure is not significantly altered by conventional weld stress relief anneals in the vicinity of 1100°F (593°C).

A number of strategies have been identified for use either individually or in combination to improve weld property of Ti-6246 alloy IBR repair. These are first, alter the thermal dynamics of the weld process by changing the weld parameters and/or joint geometry to control the weld cooling rate. Changing the composition of the weld metal to a compatible Ti alloy having a significantly lower or no propensity to form deleterious phases such as orthorhombic martensite in the weld metal is another strategy. As mentioned above, an inventive embodiment comprises using Ti-6242 alloy filler metal when welding Ti-6246 alloy to minimize centerline weld fracture. Another but not limiting example is to use post-weld thermal processing to alter the formation of deleterious phases in Ti-6246 alloy welds.

A post-weld heat treatment of about 1300°F (704°C) can eliminate the brittle orthorhombic martensite phase in Ti-6246 alloy.

A recommended stress relief anneal of airfoil 20 following deposition of repair metal may be heating the airfoil to about 1275°F (691°C) to about 1325°F (718°C) for about 1 to about 4 hours in an inert atmosphere to prevent alpha case formation. When Ti-6246 alloy is heated above 1000°F (538°C) in the presence of oxygen for an extended period of time, an embrittled zone of oxygen enriched alpha phase forms at the surface that is called "alpha case" in the art. The formation of alpha case on a titanium alloy turbine blade causes the blade to be highly susceptible to fatigue failure and deleterious impact damage by foreign objects, and needs to be avoided or significantly curtailed. For this reason, titanium alloys susceptible to alpha case formation are preferably heat treated in inert atmospheres. Following the post-weld heat treatment, the airfoil may be cooled at a rate of from about 40°F (4°C) to about 100°F (38°C) per minute. (Step 8)

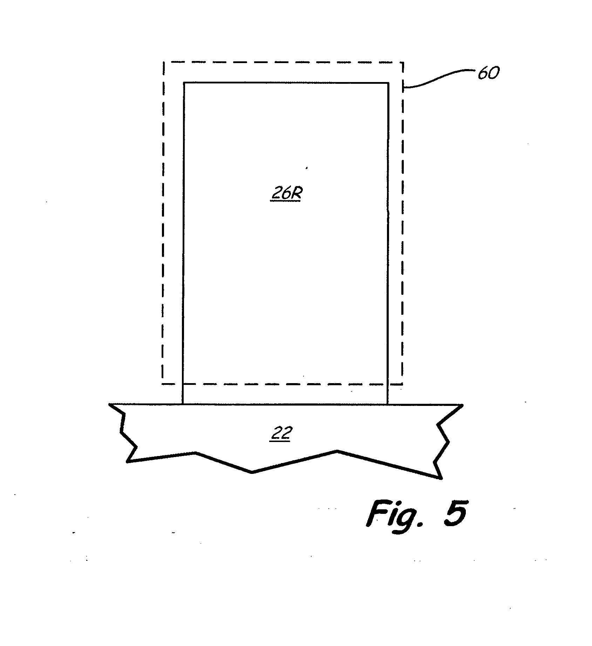

During the stress relief heat treatment, it may be important that adjacent airfoils or hub sections are not thermally affected. In particular, the root area of airfoil 20 may be preferably maintained at temperatures less than 800°F (427°C). This may be accomplished by surrounding the repaired airfoil with a fixture containing localized heat sources that heat only the airfoil under consideration. FIG. 5 schematically illustrates airfoil heat treating fixture 60 positioned on repaired airfoil 26R in an exemplary embodiment. Cooling means for maintaining hub temperatures less than 800°F (427°C) using water and air flow are incorporated in fixture 60. Heating means comprising high intensity infrared lamps are incorporated in fixture 60.

Following stress relief heat treatment (steps 6 and 8), repaired airfoil 26R is machined to predetermined dimensions and blended surface configurations. (Step 10)

To further enhance the mechanical integrity of repaired airfoil 26R, airfoil 26R is preferably subjected to laser shock peening to introduce residual surface compressive stresses. Laser shock peening is described in commonly owned US-A-6,238,187, which is incorporated herein in its entirety as reference. In laser shock peening, a high intensity laser beam impinges on airfoil 20 and injects a compressive shock wave into the part. The stress level in the shock wave exceeds the yield strength of the part resulting in a plastically deformed surface and sub-surface region containing compressive residual stresses much like ordinary shock peening but deeper in extent to airfoil 26R. During laser shock peening, the laser moves over the surface creating a series of overlapping laser shock peened spots. The spots are normally circular but other shaped spots such as elliptical, square, triangular, etc. can be used. The depth of the compressive stress zone is controlled by the pulse intensity, i.e. the power of the laser.

Following laser shock peening (Step 12) repaired airfoil 26R is returned to service (Step 14).

While the invention has been described with reference to an exemplary embodiment(s), it will be understood by those skilled in the art that various changes may be made and equivalents may be substituted for elements thereof without departing from the scope of the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method comprising:
welding a first compatible metal to an alloy component (26) wherein dimensions of the alloy component with the welded first metal exceed original dimensions of the component;
reshaping the component to predetermined specifications; and
stress relieving the component,
**characterised in that** the alloy component is a Ti-6246 alloy component, and the first metal is a filler metal alloy that comprises Ti-6242 alloy.

2. The method of claim 1, and further comprising:
treating the component after stress relieving to introduce residual compressive stresses over the surface and adjoining sub-surface region of the component.

3. The method of claim 2, wherein surface residual compressive stresses are introduced by laser shock peening.

4. The method of claim 1, 2 or 3, wherein the Ti-6246 component is a damaged Ti-6246 alloy airfoil, and preferably the damaged Ti-6246 alloy airfoil comprises at least one of a surface cavity (32), a crack (34), or a missing region (30).

5. The method of any preceding claim, wherein welding comprises at least one of gas tungsten arc welding, laser beam welding, plasma welding, and electron beam welding, and preferably wherein welding comprises gas tungsten arc welding.

6. The method of any preceding claim, wherein the Ti-6246 alloy component comprises an airfoil and stress relieving the airfoil comprises heat treating the airfoil at a temperature of from about 1275°F (691°C) to about 1325°F (718°C) for about 1 to about 4 hours, followed by a cooling rate of from about 40°F (4°C) per minute to about 100°F (38°C) per minute, and preferably the stress relieving comprises heating in an inert atmosphere.

7. The method of any preceding claim, wherein stress relieving the component comprises heating only the airfoil with a heating fixture (60) applied over the airfoil, and preferably wherein the heating fixture comprises infrared heating means and air flow and water cooling means.

8. A process comprising:
restoring a damaged Ti-6246 alloy component to original dimensions by the method of claim 1, wherein the component is an airfoil; and
treating the airfoil to introduce residual compressive stresses over the surface of the airfoil.

9. The process of claim 8, wherein the damage comprises surface cavities, cracks, and other missing regions.

10. The process of claim 8 or 9, wherein adding the metal to the airfoil comprises gas tungsten arc welding.

11. The process of any of claims 8, 9 or 10, wherein stress relieving comprises heat treating the airfoil to a temperature of from about 1275°F (691°C) to about 1325°F (718°C) for about 1 to about 4 hours, followed by a cooling rate of from about 40°F (4°C) per minute to about 100°F (38°C) per minute.

12. The process of claim 11, wherein stress relieving comprises heating only the airfoil with a heating fixture applied over the airfoil.

13. The process of claim 11 or 12, wherein stress relieving comprises heating in an inert atmosphere.

## Patentansprüche

1. Verfahren, umfassend:
Schweißen eines ersten kompatiblen Materials an ein Leichtmetallbauteil (26), wobei die Maße des Leichtmetallbauteils zusammen mit dem angeschweißten ersten Metall die Originalmaße des Bauteils übersteigen;
Umformen des Bauteils nach zuvor festgelegten Vorgaben; sowie eine Spannungsentlastung des Bauteils,
**dadurch gekennzeichnet, dass** es sich bei dem Leichtmetallbauteil um ein Ti-6246-Leichtmetallbauteil handelt, und das erste Metall eine Füllermetalllegierung ist, die Ti-6242-Leichtmetall enthält.

2. Verfahren nach Anspruch 1, außerdem Folgendes umfassend:
Behandeln des Bauteils nach der Spannungsentlastung, um Druckeigenspannungen über der Oberfläche und dem danebenliegenden Unteroberflächenbereich des Bauteils einzuführen.

3. Verfahren nach Anspruch 2, wobei die Oberflächen-Druckeigenspannungen durch Laserschockverfestigung eingeführt werden.

4. Verfahren nach Anspruch 1, 2 oder 3, wobei das Ti-6246-Bauteil ein beschädigtes Ti-6246-Leichtmetallrotorblatt ist und das beschädigte Ti-6246 Leichtmetallrotorblatt vorzugsweise mindestens eines von einem Oberflächenhohlraum (32), einem Riss (34) oder einem fehlenden Bereich (30) umfasst.

5. Verfahren nach einem der vorangehenden Ansprüche, wobei das Schweißen mindestens eines der Folgenden umfasst: Argonarc-Schweißen, Laserstrahlschweißen, Plasmaschweißen und Elektronenstrahlschweißen, und wobei das Schweißen vorzugsweise Argonarc-Schweißen umfasst.

6. Verfahren nach einem der vorangehenden Ansprüche, wobei das Ti-6246 Leichtmetallbauteil ein Rotorblatt umfasst und die Spannungsentlastung des Rotorblatts eine Hitzebehandlung des Rotorblatts bei einer Temperatur von circa 1275 °F (691 °C) bis circa 1325 °F (718 °C) über einen Zeitraum von circa einer bis zu circa 4 Stunden umfasst, gefolgt von einer Abkühlgeschwindigkeit von circa 40 °F (4 °C) pro Minute bis circa 100 °F (38 °C) pro Minute, und die Spannungsentlastung vorzugsweise das Erhitzen in einer inerten Atmosphäre umfasst.

7. Verfahren nach einem der vorangehenden Ansprüche, wobei die Spannungsentlastung des Bauteils nur das Erhitzen des Rotorblatts mit einer Heizvorrichtung (60) umfasst, die über dem Rotorblatt angebracht wird, und wobei die Heizvorrichtung vorzugsweise Infraroterhitzungsmittel sowie Luftstrom- und Wasserabkühlungsmittel umfasst.

8. Verfahren, umfassend:
Wiederherstellen der ursprünglichen Maße eines beschädigten Ti-6246-Leichtmetallbauteils mithilfe des Verfahrens nach Anspruch 1, wobei das Bauteil ein Rotorblatt darstellt; und
Behandeln des Rotorblatts zur Einführung von Druckeigenspannungen über der Oberfläche des Rotorblatts.

9. Verfahren nach Anspruch 8, wobei der Schaden Oberflächenhohlräume, Risse und andere fehlende Bereiche umfasst.

10. Verfahren nach Anspruch 8 oder 9, wobei das Metall dem Rotor durch Argonarc-Schweißen hinzugefügt wird.

11. Verfahren nach einem der Ansprüche 8, 9 oder 10, wobei die Spannungsentlastung eine Hitzebehandlung des Rotorblatts bei einer Temperatur von circa 1275 °F (691 °C) bis circa 1325 °F (718 °C) über einen Zeitraum von circa einer bis zu circa 4 Stunden umfasst, gefolgt von einer Abkühlgeschwindigkeit von circa 40 °F (4 °C) pro Minute bis circa 100 °F (38 °C) pro Minute.

12. Verfahren nach Anspruch 11, wobei die Spannungsentlastung nur das Erhitzen des Rotorblatts mit einer Heizvorrichtung umfasst, die über dem Rotorblatt angebracht ist.

13. Verfahren nach Anspruch 11 oder 12, wobei die Spannungsentlastung das Erhitzen in einer inerten Atmosphäre umfasst.

## Revendications

1. Procédé comprenant :
le soudage d'un premier métal compatible avec un composant d'alliage (26) dans lequel les dimensions du composant d'alliage avec le premier métal soudé dépasse les dimensions originelles du composant ;
refaçonner le composant selon les spécifications prédéterminées ; et
l'allégement du stress du composant,
**caractérisé en ce que** le composant d'alliage est un composant d'alliage Ti-6246, et le premier métal et un métal d'alliage de remplissage qui comprend un alliage de Ti-6242.

2. Procédé de la revendication 1, et comprenant également :
le traitement du composant après l'allégement du stress afin d'introduire des stress compressifs résiduels au-dessus de la surface et de la région sous la surface avoisinante du composant.

3. Procédé de la revendication 2, dans lequel les stress compressifs résiduels de la surface sont introduits par martelage au choc laser.

4. Procédé de la revendication 1, 2 ou 3, dans lequel le composant Ti-6246 endommagé est une surface portante en un alliage Ti-6246, et préférablement la surface portante endommagée en un alliage Ti-6246 comprend au moins l'une d'une cavité en surface (32), d'une fissure (34) ou d'une région manquante (30).

5. Procédé selon l'une quelconque des revendications précédentes, dans lequel le soudage comprend au moins l'un du soudage à l'électrode de tungstène, un soudage par faisceau laser, un soudage au plasma et un soudage aux rayons d'électrons, et préférablement dans lequel le soudage comprend un soudage à l'électrode de tungstène.

6. Procédé selon l'une quelconque des revendications précédentes, dans lequel le composant de l'alliage Ti-6246 comprend une surface portante et l'allégement du stress de la surface portante comprend le chauffage de la surface portante à une température d'environ 1275 °F (691 °C) à environ 1325 °F (718 °C) pendant environ 1 à 4 heures, suivi d'une vitesse de refroidissement d'environ 40 °F (4 °C) par minute à environ 100 °F (38 °C) par minute, et, de préférence, l'allégement du stress comprend le chauffage sous une atmosphère inerte.

7. Procédé selon l'une quelconque des revendications précédentes, dans lequel l'allégement du stress du composant comprend le chauffage de la surface portante avec un support de chauffage (60) appliqué au-dessus de la surface portante, et, de préférence, dans lequel le support de chauffage comprend un moyen de chauffage par infrarouge et un moyen de circulation d'air et de refroidissement par l'eau.

8. Procédé comprenant :
la restauration d'un composant d'alliage en Ti-6246 endommagé à ses dimensions originelles par le procédé de la revendication 1, dans lequel le composant est une surface portante ; et
le traitement de la surface portante pour introduire des stress compressifs résiduels sur la surface de la surface portante.

9. Procédé de la revendication 8, dans lequel les dommages comprennent des cavités en surface, des fissures et d'autres régions manquantes.

10. Procédé de la revendication 8 ou 9, dans lequel l'ajout du métal à la surface portante comprend un soudage à l'électrode de tungstène.

11. Procédé de l'une quelconque des revendications 8, 9 ou 10, dans lequel l'allégement du stress comprend le traitement thermique de la surface portante à une température d'environ 1275 °F (691 °C) à environ 1325 °F (718 °C) pendant environ 1 heure à 4 heures, suivi d'une vitesse de refroidissement d'environ 40 °F (4 °C) par minute à environ 100 °F (38 °C) par minute.

12. Procédé de la revendication 11, dans lequel l'allégement du stress comprend le chauffage de la surface portante seulement avec le support de chauffage appliqué au-dessus de la surface portante.

13. Procédé de la revendication 11 ou 12, dans lequel l'allégement du stress comprend le chauffage sous une atmosphère inerte.
